(19) Europäisches Patentamt
European Patent Office
Office européen des brevets

(11) EP 0 739 506 B1

(12) EUROPEAN PATENT SPECIFICATION

(45) Date of publication and mention
of the grant of the patent:
13.01.1999 Bulletin 1999/02

(51) Int Cl.⁶: **G05D 23/19**, G05B 13/02,
**B60H 1/00**

(21) Application number: 94918457.6

(22) Date of filing: 21.06.1994

(86) International application number:
PCT/GB94/01335

(87) International publication number:
WO 95/01592 (12.01.1995 Gazette 1995/03)

(54) **METHOD AND SYSTEM FOR CONTROLLING AN AUTOMOTIVE HVAC SYSTEM**

VERFAHREN UND VORRICHTUNG ZUR STEUERUNG EINER KLIMAANLAGE FÜR FAHRZEUGE

PROCEDE ET SYSTEME DE COMMANDE POUR LA CLIMATISATION D'UNE AUTOMOBILE

(84) Designated Contracting States:
**DE FR GB**

(30) Priority: **30.06.1993 US 83756**

(43) Date of publication of application:
**30.10.1996 Bulletin 1996/44**

(73) Proprietors:
• **FORD MOTOR COMPANY LIMITED
Brentwood, Essex CM13 3BW (GB)**
Designated Contracting States:
**GB**
• **FORD MOTOR COMPANY
Dearborn, MI 48126 (US)**
Designated Contracting States:
**DE FR**

(72) Inventors:
• **DAVIS, Leighton, Ira
Ann Arbor, MI 48104 (US)**
• **SIEJA, Thomas Francis,
Dearborn, MI 48124 (US)**
• **DAGE, Gerhard, Allan
Franklin, MI 48025 (US)**
• **MATTESON, Robert, Wayne
Ann Arbor, MI 48105 (US)**

(74) Representative: **Messulam, Alec Moses et al
A. Messulam & Co.
24 Broadway
Leigh-on-Sea Essex SS9 1BN (GB)**

(56) References cited:
**US-A- 4 914 924          US-A- 5 165 595**

• **PATENT ABSTRACTS OF JAPAN vol. 13, no. 202
(M-824) 12 May 1989 & JP,A,01 022 617 (NISSAN
MOTOR CO LTD) 25 January 1989**

## Description

This invention relates to methods and control systems for controlling an automotive HVAC system and, in particular, to methods and systems for controlling an automotive HVAC system using fuzzy logic.

This application is related to U.S. patent applications 083757 and 083589 entitled "Method And Control System For Controlling An Automotive HVAC System To Prevent The Discharge Of Air Within A Predetermined Temperature Range" and "Method And System For Modifying A.Linear Control Algorithm Which Controls An Automotive HVAC System".

A fundamental goal of automotive heating, ventilating, and air conditioning (HVAC) systems is to make vehicle occupants comfortable. To achieve this goal, it is important that the design of the control system that establishes cabin conditions takes into account the relationship between comfort and the variables that affect comfort. Human comfort is a complex reaction, involving physical, biological, and psychological responses to the given conditions. Because of this complexity, the engineer must consider many variables and their possible interaction in the design strategy of such a control system or controller.

In an attempt to measure and control the many variables that affect comfort, modern automotive HVAC systems have many sensors and control actuators. A typical system might have a temperature sensor inside the cabin, one measuring ambient temperature outside and others measuring various temperatures of the system internal workings. The occupant may have some input to the system via a set point or other adjustment. Additional sensors measuring sun heating load, humidity, etc. might be available to the system. The set of actuators might include a variable speed blower, some means for varying air temperature, ducting and doors to control the direction of air flow and the ratio of fresh to recirculated air.

It falls to the controller to sort out the range of possible conditions, determine what is needed to achieve comfort, and coordinate the control of the set of actuators available. This multiple input, multiple output control problem does not fall into any convenient category of traditional control theory. The performance criterion, comfort, is not some well defined formula but a sometimes inconsistent goal, empirically determined. In particular, comfort control is not the same as temperature control. The response of the system as well as the relationship between system variables and desired performance, comfort, is rarely linear. Also, it is important to note that despite all the actuators and variables available for control, there may exist conditions under which comfort may not be achievable.

Due to practical considerations of size, energy consumption, cost and the wide conceivable range of conditions that automobiles are exposed to, the system plant may simply not be able to supply what is needed. All these considerations lead to a control problem that is far from what is usually encountered in traditional control theory.

In the face of these difficulties, most control system designs have used what is familiar - linear control - and supplemented it by patched-in specific responses to handle special circumstances where necessary. In other words, typical automobile automatic climate control systems use linear proportional control to maintain a comfortable interior environment. However, there are two significant limitations of linear proportional control when viewed from the standpoint of an occupant's subjective comfort: first, there are certain control situations in any HVAC system that are inherently nonlinear, and second, it is not possible to realize occupant comfort merely by maintaining proximity to a desired temperature as described in greater detail hereinbelow.

The design of a typical HVAC climate control system starts with the need to provide acceptable occupant comfort levels under the most extreme high and low ambient conditions that a vehicle might encounter. For these conditions, the control system is requesting the HVAC unit to operate at peak output in one direction or the other. Design considerations center around plant capacity and the efficiency of heat transfer in order to handle these extremes. The control system is effectively saturated until one or more of the input signals indicate that some level of comfort control is achievable.

It is at this point that the system begins to moderate its control of blower speed, the location of discharge air (mode of operation), and the relative blend of cooled and heated air. The simplest approach to control in this region is to have the control follow a straight line between the two extremes. Such a linear control algorithm adjusts the outputs in an appropriate manner and its parameters are easy to determine based on the points of onset of the two extreme regions. With a well defined HVAC system and enough developmental evaluation time, one can tune the coefficients to provide acceptable levels of comfort for a variety of operating conditions. The linear approach is quite well understood and easy to implement. For a small microprocessor-based controller, its essence is captured in a few lines of code.

The linear approach has obvious limitations when dealing with nonlinear situations. All HVAC systems behave nonlinearly in various regions of their operation. The transfer of heat as a function of blower speed is nonlinear. The onset of any plant output limitation affects desired response in a nonlinear fashion. Factors affecting plant limitations may be tracked via additional sensors - for example, engine coolant temperature (ECT) correlates with heater core temperature - but again, the relationship is nonlinear. The usual approach to handling special nonlinear situations is to use logic-based modification of the usual linear strategy when these situations are detected. Thus, in cold weather, when ECT is below a certain threshold indicating that the heater core cannot warm the cabin, the blower would be shut off.

This particular solution to the problem of nonlinearities creates problems of its own. In the case of the binary ECT threshold switch, interaction with the linear strategy leads to difficulties. When the threshold ECT is passed, the switch turns on the blower. Since the car is cold, the blower immediately goes to its highest setting and creates two problems. The first is the noise level produced by the blower operating full out. The second problem is that all the residual cold air in the system is blown directly onto the customer's feet causing discomfort.

In addition to the current difficulties, new vehicle lines create additional problems that are not easy to overcome. The reduction in interior and under hood package space in current vehicle designs has caused the transfer function for discharge temperature to be even more nonlinear, especially when operating at the extremes of ambient temperature.

The response of crisp (as opposed to fuzzy) logic in a control strategy does not fit well when human comfort is the goal. Abrupt changes in environment are not perceived favorably by most people. It is true that the effect of sudden changes occasioned by crisp logic transitions may be masked via input or output filtering. Also, some of the resulting conditions may not be experienced by the occupant as a level of discomfort. For example, heater warmup, linear or nonlinear, has no effect on comfort on a hot day with the system at maximum cooling.

As previously mentioned, the description of comfort for most people is expressed in terms that are not particularly precise. If one asks people how they describe their comfort, we get answers such as "slightly cold", "fine", or "very hot." A person's comfort can easily be phrased in such vague terms but it is more difficult to interpret these expressions quantitatively. The imprecise nature of comfort description leads to the use of fuzzy logic in specifying a strategy for comfort control. Fuzzy logic provides procedures to incorporate knowledge expressed vaguely and yet arrive at a definite, calculable answer.

Fuzzy logic is a methodology for handling knowledge that contains some uncertainty or vagueness. The foundations of fuzzy logic were set forth in the 1960s by L.A. Zadeh in his paper entitled "Fuzzy Sets", Inform. Contr., 8 pp. 338-353, 1965.

In current engineering application, fuzzy logic is most often found in control problems in the form of a particular procedure, called "max-min" fuzzy inference as described by Ebrahim Mamdani in his paper entitled "Application of Fuzzy Logic to Approximate Reasoning Using Linguistic Synthesis", IEEE Transactions on Computers, (1977) C-26, No. 12, pp. 1182-1191. This procedure incorporates approximate knowledge of appropriate control response for different circumstances into sets of rules for calculating a particular control action. The rules are expressed in terms of "IF (situation holds), THEN (take consequent control action)". The degree to which a particular consequent action is taken depends on the degree to which its corresponding conditions hold. The linguistic expression of a situation or consequent control action is translated into a definite calculation via specified membership functions. A membership function quantifies what is meant by a phrase such as "The temperature is high" by defining the degree of membership in the class, "high", depending on the value of the input variable, temperature.

U.S. Patent No. 5,148,977 uses an infrared sensor to measure wall temperature and uses that value to modify room temperature using fuzzy logic.

U.S. Patent No. 5,156,013 discloses a control device for an adsorption refrigerator including a generator. A heating amount of the generator is controlled by a fuzzy logic calculation. The fuzzy logic algorithm utilizes a standard matrix approach choice of input and output membership functions to compute an output value in a standard fashion.

U.S. Patent No. 4,914,924 senses driver intent along with air conditioning system state to balance the conflicting tradeoffs of powertrain performance versus air conditioning performance. Driver intent is sensed via a throttle position sensor and a preference switch. Air conditioning system state is sensed via the standard complement of sensors found in most systems. Standard fuzzy logic inference is used directly to sort out the tradeoffs as well as performing the usual functions of climate control.

According to the invention there is provided a method for automatically controlling a heating, ventilation and air conditioning (HVAC) system of a vehicle which discharges a flow of air to a passenger cabin of the vehicle, the system including a variable speed blower, means for varying air temperature, ducting, actuators having various control positions for controlling the direction of air flow and the ratio of fresh air to recirculated air and sensors for sensing temperature within the cabin, ambient temperature and a target set point temperature, the method comprising the steps of:

determining the difference between temperature within the cabin and the target set point temperature to obtain a difference signal;
defining membership functions and fuzzy rules between the difference signal and the speed of the blower and between the difference signal and the control positions of the actuators; and
generating control signals to control the positions of the actuators and the speed of the blower to cause the system to discharge air into the cabin having a temperature and flow based on the difference signal, the membership functions and the fuzzy rules,

characterised in that the method uses a control algorithm to calculate a fuzzzy variable conditioned on ambient temperature and the said difference signal to vary the position of a temperature blend door included in the system to control the discharge temperature of the said air flow, the control algorithm being effective to hold the said discharge temperature below the lower limit of an excluded range of temperature when the said range is approached from below and to hold the said discharge temperature above the excluded range when approached from above such that the relation between the said discharge temperature and the blend door position follows a hysteresis loop.

The invention further embraces a control system as defined in claim 6.

The invention will now be described further by way of example, with reference to the accompanying drawings in which:

Figure 1 is a schematic diagram illustrating an air handling system which can be controlled by the method and control system of the present invention;

Figure 2 is a schematic block diagram of the control system of the present invention;

Figures 3a through 3e are graphical illustrations of a blower speed rule set including antecedent and corresponding consequent membership functions;

Figure 4 is a graphical response surface resulting from the rule set of Figures 3a through 3e;

Figures 5a through 5e are graphical illustrations of a mode shift rule set including antecedent and corresponding membership functions;

Figure 6 is a graphical response surface resulting from the rule set of Figures 5a through 5e;

Figures 7a through 7h are graphical illustrations of an offset rule set including antecedent and corresponding membership functions;

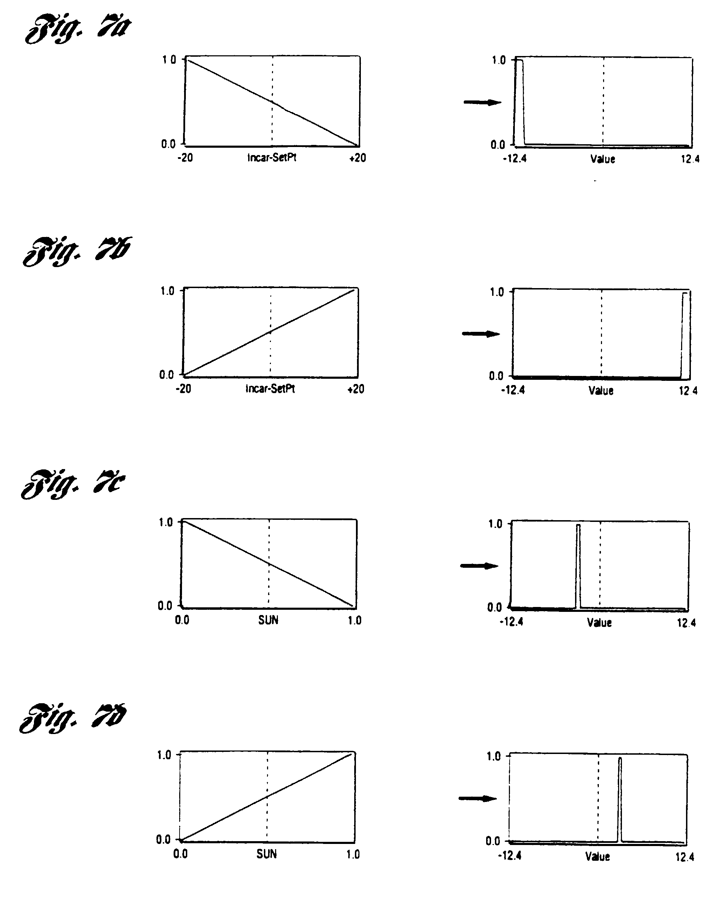

Figures 8a through 8c are graphical illustrations of a target adjust rule set including antecedent and corresponding membership functions;

Figure 9 is a graph of a variable target adjust as a function of ambient temperature;

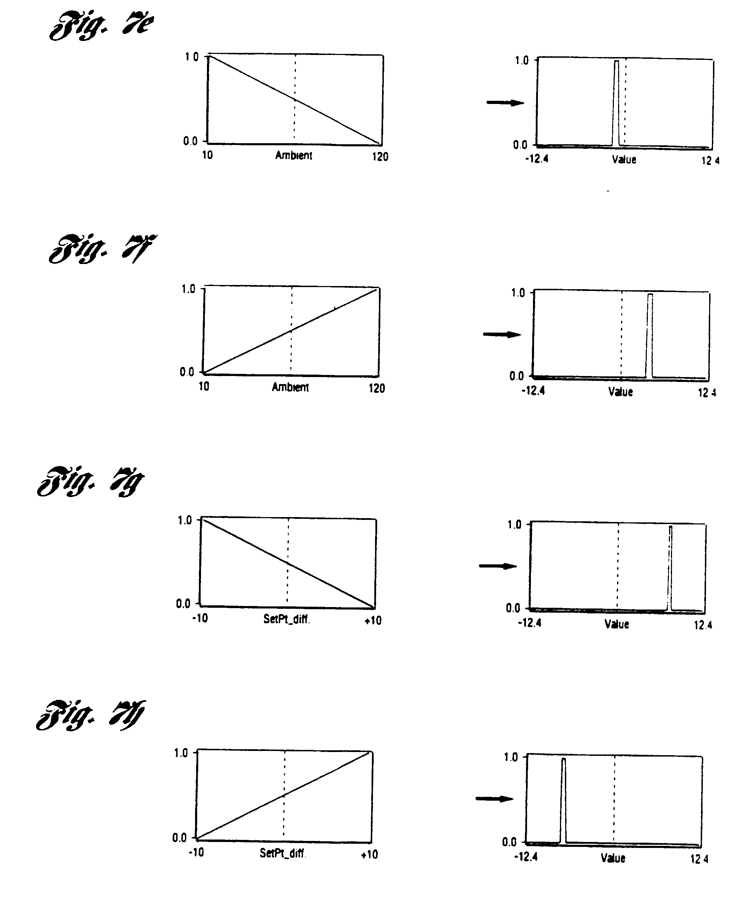

Figures 10a through 10c are graphical illustrations of a gain variable, $G_3$, rule set including antecedent and corresponding consequent membership functions;

Figures 11a through 11c are graphical illustrations of a gain variable, $G_4$, rule set including antecedent and corresponding consequent membership functions;

Figure 12 is a graph of discharge temperature versus blend door position with excluded temperatures being illustrated by a hysteresis loop;

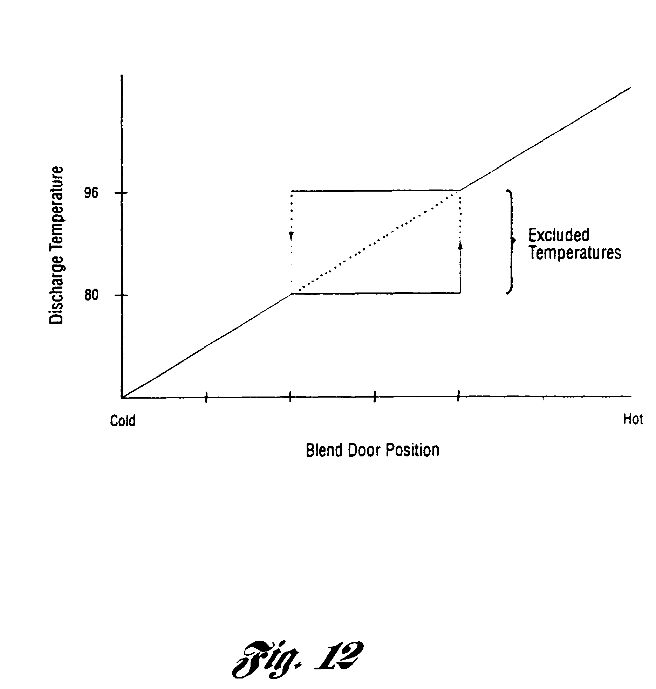

Figure 13 are graphs of blower motor voltage and blend door positions versus in-car temperature;

Figure 14 are graphs of cabin temperature versus ambient temperature for the prior art and the present invention at 75 degree set point;

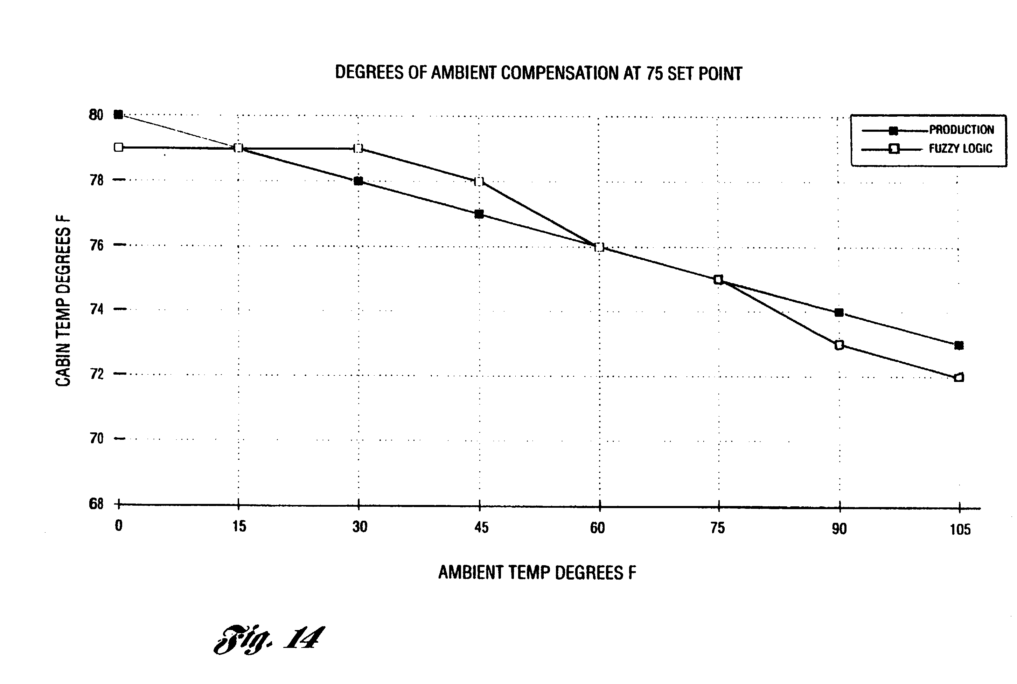

Figure 15 is a graph of blower speed versus engine coolant temperature during heater warm-up;

Figure 16 is a schematic diagram of a model of the air handling system of Figure 1; and

Figure 17 is a schematic diagram of an example of a single interaction between a parcel of air having an input temperature and a part of the air handling system.

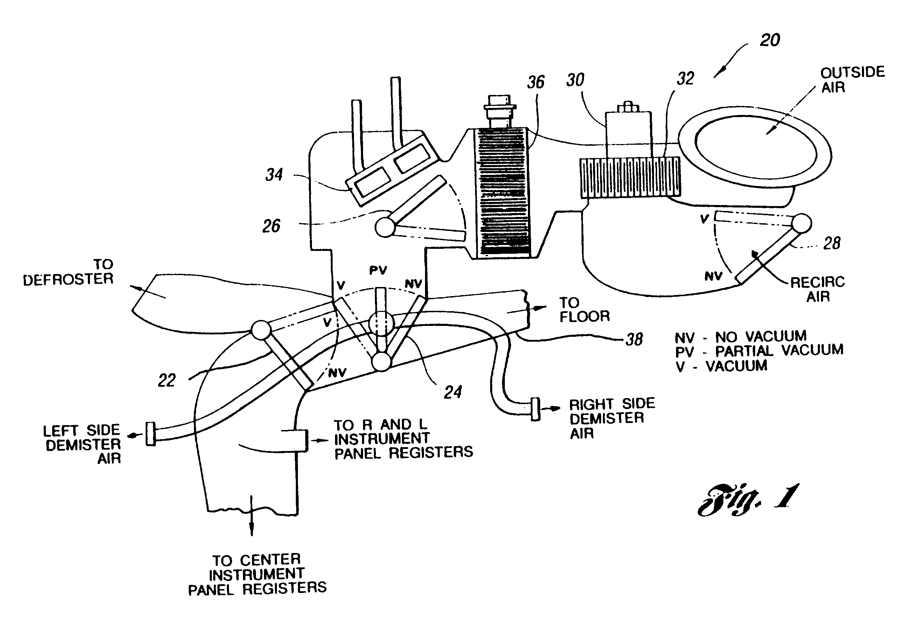

In general, control of temperature within an automobile is accomplished using various actuators to adjust the temperature and flow of air supplied to the cabin of the vehicle. Figure 1 shows schematically an air handling system of an HVAC (heating, ventilation and air conditioning) system, generally indicated at 20. The system 20 includes the arrangement of panel-defrost, floor-panel, temperature blend and outside recirc air actuators or doors 22, 24, 26 and 28, respectively. The doors 22, 24 and 28 are driven by vacuum motors (not shown) between their various vacuum, partial vacuum and no vacuum positions in a conventional fashion as indicated in Figure 1. The door 26 is driven by an electric servo motor also in a conventional fashion.

The system 20 also includes a variable speed blower motor or fan 30 including a blower wheel 32.

The system further includes heating and cooling elements such as a heater core 34 and an evaporator core 36 in a typical vehicle air conditioning plant. Each of the above components is in communication with ducting 38 in order to control temperature, the direction of air flow and the ratio of fresh air to recirculated air.

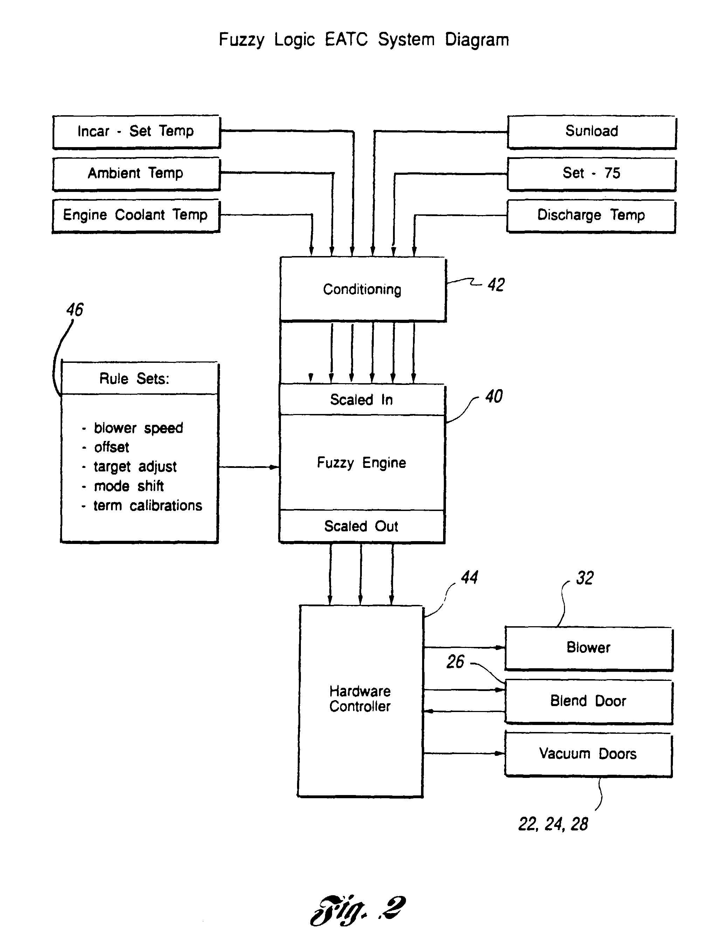

For automatic control of the temperature and flow of air in the cabin, conditions within and outside the cabin are monitored by sensors and an electronic controller generates signals to control the plant actuators according to the conditions as indicated by the sensors. As illustrated in Figure 2, a typical complement of sensors of the HVAC system provide signals which are representative of in-car temperature, ambient (outside) air temperature, engine coolant temperature (ECT), discharge air temperature and sunload. In addition, there is a set signal or set temperature value indicating the desired temperature that is set manually by the driver. In turn, an incar-set temperature (in-car minus set temperature). signal and a set-75 (set temperature minus 24°C or 75 degrees Fahrenheit) signal are generated or calculated.

The signals are provided to an electronic controller 40 as inputs after being conditioned by a conditioning circuit 42. The controller 40 scales the input signals and provides scaled output signals for use by a hardware controller 44 which, in turn, controls the doors 22 through 28 to regulate the temperature and flow of air and ultimately to maintain the comfort of driver and passengers in the vehicle.

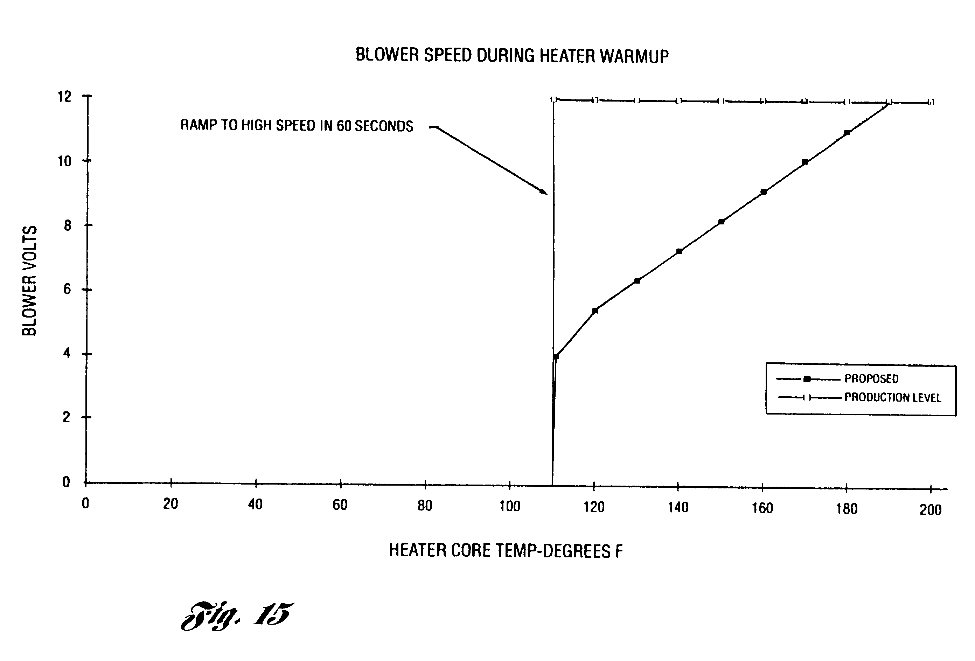

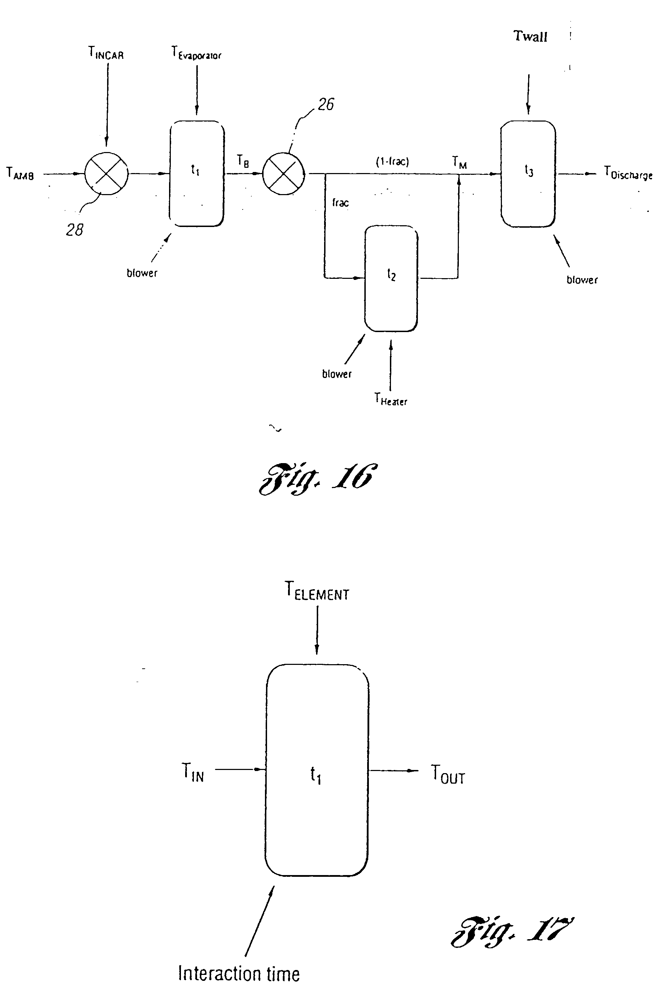

Referring to Figure 16, there is illustrated a discharge temperature model based on a physical model of the climate control plant of Figure 1. It is assumed that the process used to obtain a parcel of air at a particular temperature can be broken up into a series of interactions of that parcel and various elements of the system. Figure 17 gives an example of one such interaction between a parcel of air at temperature $T_{in}$ and a plant element at temperature $T_{element}$. The temperature of the input air "decays" toward the temperature of the element, depending on how long the air is in contact with the element. The resulting temperature of the air after the interaction is given by:

$$T_{out} = T_{in} + (T_{element} - T_{in}) * (1 - e^{\Delta t/t1})$$

where $T_{element}$ is the temperature of the component, t is an interaction time, and $t_1$ is a time constant for the interaction. This formula assures that the resulting temperature is between $T_{element}$ and $T_{in}$. The interaction time is a function of blower speed: one would normally expect interaction time to be inversely proportional to blower speed, but in the case of interaction with the heater core 34 the data indicate a direct proportionality.

The system of Figure 16 starts with air at either $T_{ambient}$ or $T_{incar}$, depending on the position of the recirculation door 28. This air interacts first with the A/C core or evaporator 36 (assuming no temperature change through the blower wheel 32) and then is divided into two paths by the blend door 26. One fraction of the air interacts with the heater core 34 and the remainder passes by to rejoin and mix with the heated air. One assumes the fraction of air routed to the heater core 34 is directly proportional to the blend door position (however, any more appropriate function could be substituted therefore). The final interaction is with the walls of the discharge ducting beyond the blend door 26.

Assuming the walls are at $T_{incar}$, interaction time, as well as $T_{wall}$, depends on door positions. The various parameters of this model are chosen either by common sense or by hand fitting to data. For example, one uses 44 deg. as $T_{evaporator}$, ECT as $T_{heater}$, and as mentioned, $T_{incar}$ as $T_{wall}$. The time constants for the interactions are all hand fit. For example, the data indicate $t_1$ is large, i.e., $T_B \approx T_{evaporator}$. As mentioned before, interaction time is proportional to blower speed in the case of the heater core 34.

The fitting of the parameters could also be done via a more rigorous procedure such as least squares.

The calculated value for discharge temperature from this model is filtered with a 15 second time constant to give the final value used by the preferred control strategy as described below. This approach obviates the need for an additional sensor but still gives discharge temperature within a few degrees of actual values.

A control algorithm is a name for the mathematical process that takes sensor inputs and produces control outputs. There is described in detail below a control strategy based on fuzzy logic as illustrated by rule sets 46 in Figure 2 for control of temperature regulation and passenger comfort.

In the block diagram of the fuzzy logic system of Figure 2, sensor inputs are conditioned, scaled, and passed to a fuzzy inference engine of the controller 40. Rule sets for the various control functions - blower speed, offset, target set point, mode shift, recirculation/fresh mode shift, term calibrations, etc. provide the inference engine with the details of the strategy to be performed. The fuzzy outputs are scaled and passed to the routines to control the motors, actuators, and doors that accomplish the flow and conditioning of the air supplied to the passenger compartment. The rule set basis for control organizes the strategy in a manner that allows easy calibration and adjustment of the control operation.

Control algorithms should take into account that a range of discharge temperatures is not experienced as being very pleasant. The usual approach is to "hide" the air produce by the plant when its temperature is within a certain range. The air is "hidden" by directing it partially through the defrost outlet and partially to the floor rather than through the panel. The present application describes a means whereby an uncomfortable range of temperatures is not produced at all, yet regulation and passenger comfort are maintained.

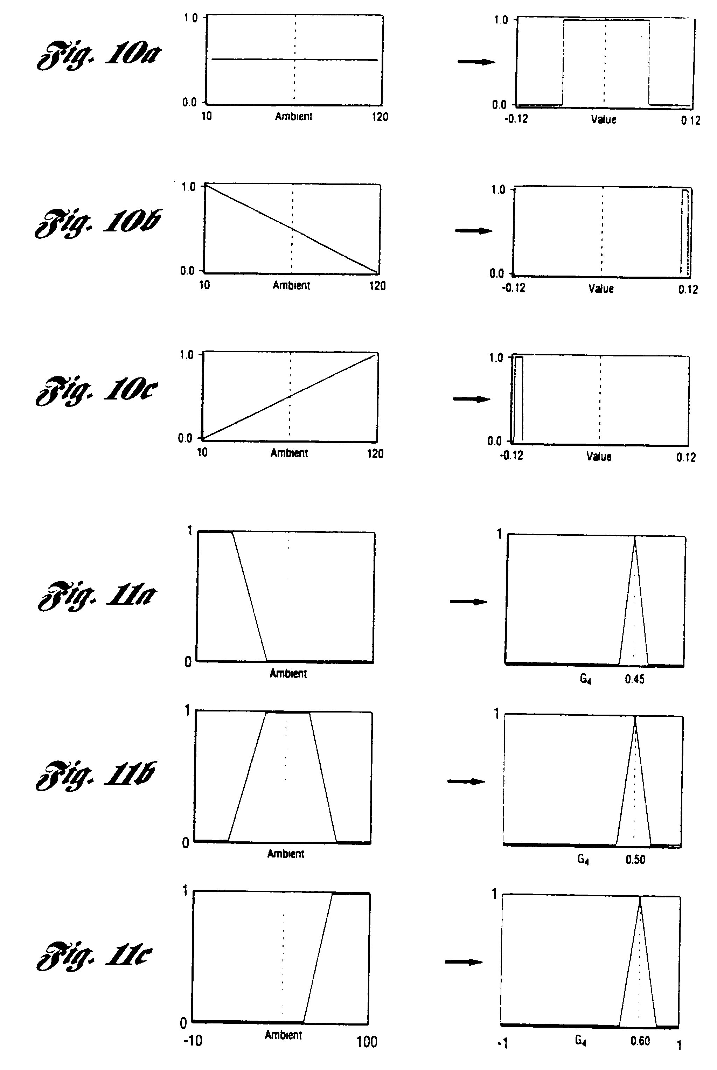

The exclude air algorithm operates by holding discharge air temperature just below the lower limit of the uncomfortable range when this region is approached from below and holding discharge temperature just above the uncomfortable range when approached from above. Figure 12 is a graph of the dependence of discharge air temperature as a function of blend door position (with other variables held constant) showing the region of excluded temperatures. The approach to this region is detected by any of a number of methods: actual measurement of discharge temperature, modelling of discharge temperature from the sensor and actuator information known, or blend door attaining particular upper or lower positions for certain conditions of ambient temperature and set point temperatures. As in Figure 2, blend door position is fed back to the controller 44 by way of a return arrow.

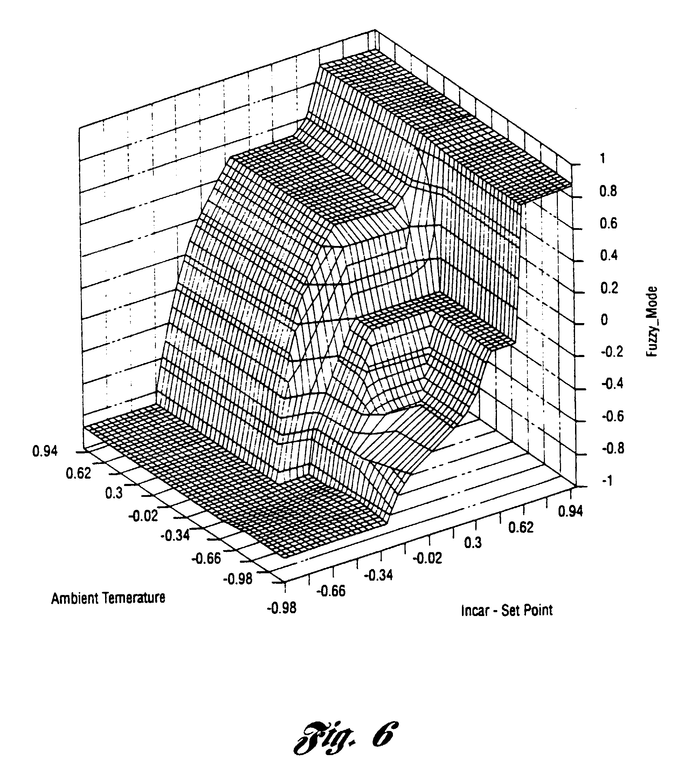

Implementation of this strategy is by calculation of a variable called *fuzzy_mode,* conditioned on ambient temperature and regulation error as indicated in Figure 6 wherein other variables such as sunload and discharge temperature are assumed to be constant. The value of this variable determines when mode transitions occur (as indicated by the arrows in Figure 12). If the current mode is floor and this variable exceeds a certain threshold, the mode switches to panel (i.e. vacuum motor moves floor-panel door 24 to its NV position with the panel-defrost door in its V position). If the current mode is panel and this variable drops below a certain threshold, the mode switches to floor (i.e. vacuum motor moves floor-panel door 24 to its V position with the panel-defrost door 22 to its V position).

Figure 6 shows the value of *fuzzy_mode* as a function of regulation error and ambient temperature (these are shown scaled between -1 and 1 rather than their actual ranges of -20 to +20 for regulation error and 10 and 120 for ambient temperature). The L-shaped flat region in the middle of the surface evaluating to zero. The size of this region determines the hysteresis in switching between modes.

Equation 1 below shows a prior art linear control formula. The control value calculated is scaled and used for both blower speed and blend door actuation. The coefficients, $K_1$, $K_2$, $K_3$, and $K_4$ are constant gains that must be calibrated to compensate for the effect of their respective terms on the resulting control.

$$Control\_Value = Offset - K_1 * SUN + K_2 * (Set\_Point-75)$$

$$+ K_3 * (75\text{-}Ambient) + K_4 * (Set\_Point\text{-}Incar) \tag{1}$$

In fuzzy-linear control of the present application, the calculation takes the same form as in Equation 1 above, only some of the coefficients and variables are now fuzzy output variables. Consider, for example,

$$FL\_Value = \underline{Offset} - \underline{G}_1 * SUM + \underline{G}_2 * (Set\_Point-75)$$

$$+ \underline{G}_3 * (75\text{-}Ambient) + \underline{G}_4 * (Target\text{-}Incar) \tag{2}$$

where all the underlined symbols represent fuzzy output variables calculated as functions of the sensor inputs. By "fuzzy output variable," one means variables calculated from the sensor inputs according to the usual fuzzy logic Max-min algorithm as described in the above-noted paper of Mamdani using a set of rules. This form obviously subsumes linear control in its possible control behaviour, but it can be appropriately nonlinear and also includes direct fuzzy control as is described hereinbelow.

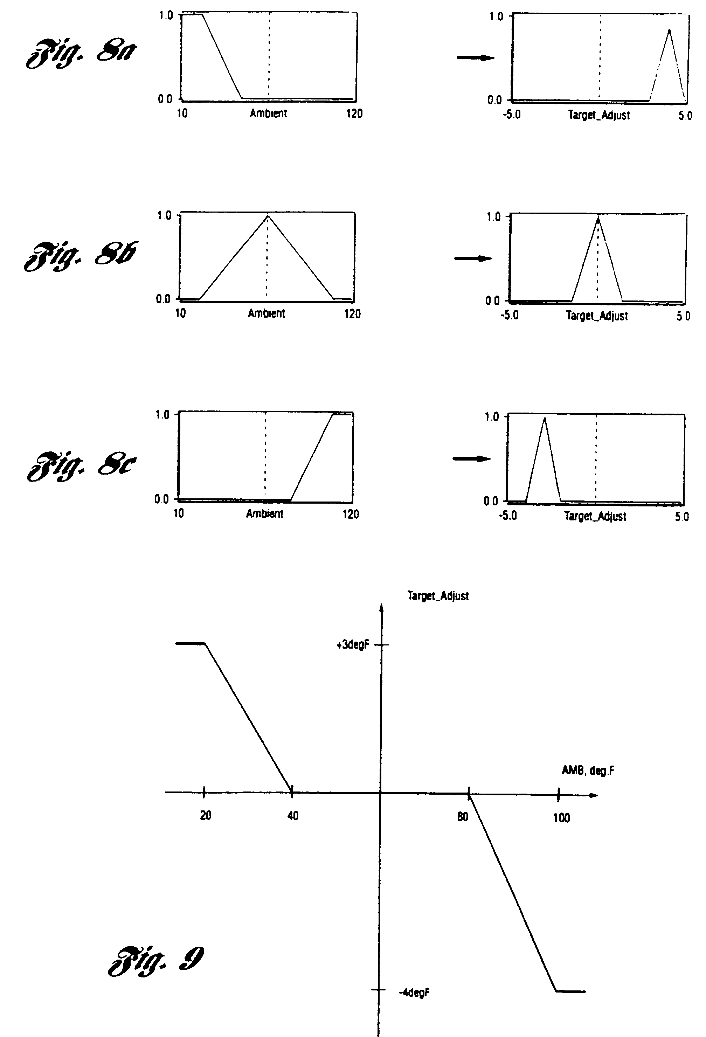

Choosing any of the various gains to be fuzzy variables allows calibration blending. Suppose one obtained calibration values for $\underline{G}_4$ of 0.45 during winter tests, 0.50 during the spring, and 0.60 for the summer. The fuzzy evaluation process illustrated in Figures 11a through 11c could be used to blend these calibration values in a reasonable fashion as a function of ambient temperature. No one value of calibration need be agreed upon and chosen, instead ambient temperature is used as an indicator of which calibrations come into play in determining the value of $\underline{G}_4$.

The fuzzy variable, "Target," in Equation 2 can be used to compensate for variation of control most logically associated with set points changes, either from physical, mechanical, or even psychological causes. For example, suppose it is determined that what most customers mean by a 72 degree set point is "comfortable", a set point of just that value for most circumstances - but for different seasons that translates into different temperatures. In winter "comfortable" might mean an actual temperature of 75 degrees even though the customer setting is at 72 degrees. In summer, it might be an actual value of 68 degrees for a setting of 72. Figures 11a through 11c illustrate how this customer "offset-in-meaning" might be compensated for via the Target fuzzy variable. One chooses Target = Set_Point + Target Adjust, where Target Adjust behaves according to the graph.

The fuzzy variable, Offset, in Equation 2 is used to compensate for all other nonlinear effects that do not fall easily into the above categories. Figures 7a-7h show the membership functions which define the offsets. If, for example, for cold-weather starting, one wanted to block air flow over the heater core 34 to allow the engine to warm up more quickly, Offset would be chosen to be a fuzzy variable of engine temperature. The value of Offset would be blended between its usual calibration value and a value that would fully block the heater core 34 as a function of engine temperature in the same way gains were blended as a function of ambient temperature.

The fuzzy output variable $G_3$ in Equation 2 is used to compensate for a higher rate of loss of heat when the outside temperature is very cold. One simply adds a rule stating that if AMB is LOW, then $G_3$ is high (relative to its normal value).

All these features provide the advantages of nonlinear control that, for example, direct fuzzy logic control could provide, but with a simpler, more natural organization that will allow easier calibration and adjustment with attendant shortening of development time.

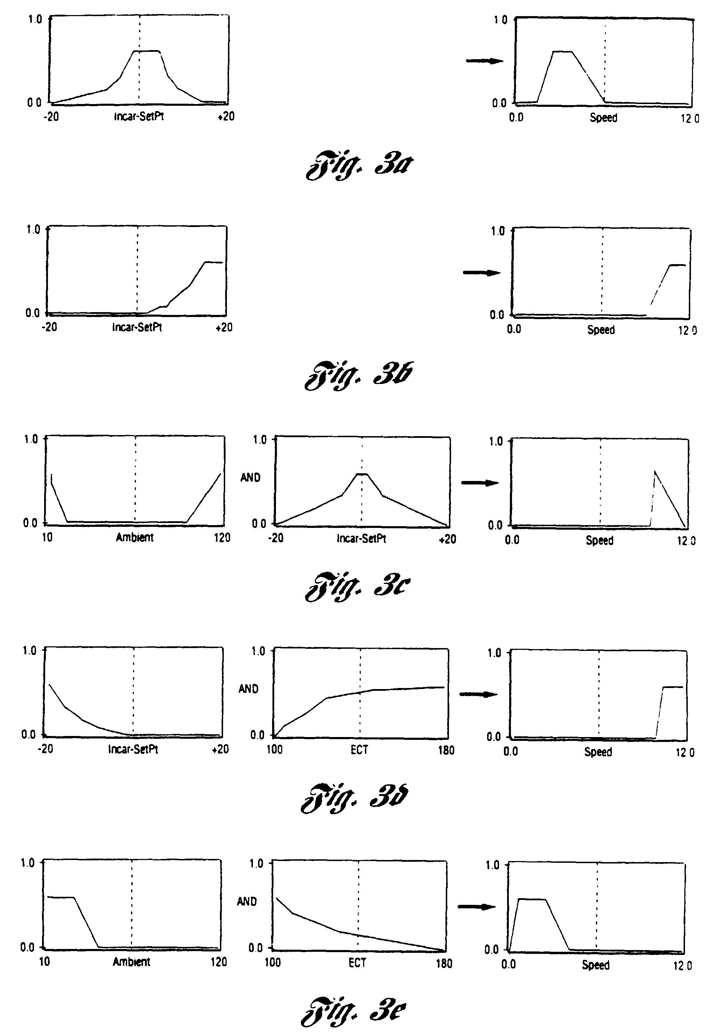

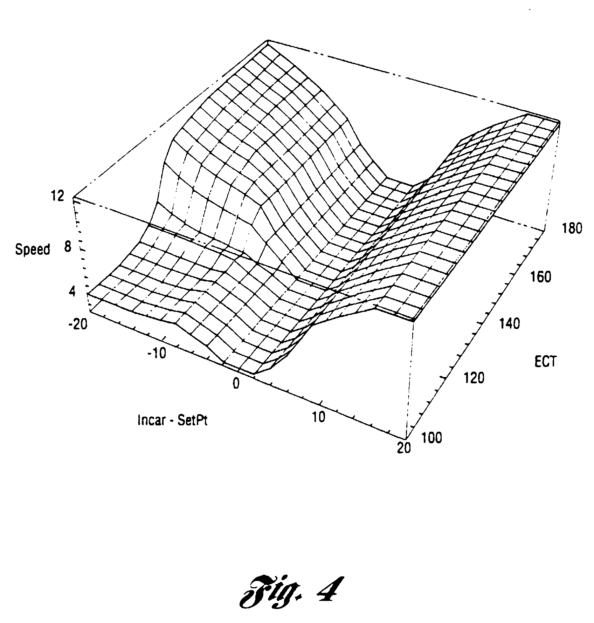

Referring again to Figures 1 and 2 in combination with Figures 3a-3e and Figure 4, the desired blower speed of an automobile heating/air conditioning system 20 can be considered a function of temperature error (in-car temperature - set point temperature) and engine coolant temperature (ECT). If the error is small, low blower speed is desired. If the error is positive and high (it's hot inside), high speed is needed to cool the cabin down. If the error is negative (it's cold inside) and the engine is cold, a little speed is needed for defrost but if the engine is warm, high speed is needed to heat up the cabin. The descriptions "small error", "high speed", etc., are defined by the membership functions in the set of rules shown in Figures 3a-3e.

In Figures 3a-3e, the degree to which a rule holds is computed from the antecedent membership functions on the left which are dependent on their respective input values. The consequent membership functions on the right define the degree of control action (blower speed) to be taken when the antecedent condition pertains.

The heuristic rules for blower speed are as follows:

1. If Incar is close to Set Temperature, then the blower tends toward a low speed;
2. If Incar-Set is high, then the blower tends toward a high speed;
3. If the Ambient Temperature is very hot or very cold and Incar is close to Set Temperature, then the blower tends toward a medium speed;
4. If Incar-Set is negative and Engine Coolant Temperature is high, then the blower tends toward a high speed; and
5. If the Ambient Temperature is low and Engine Coolant Temperature is low, then the blower tends toward a low speed.

In this way, blower speed varies with ECT (37.7° - 82.2°C or 100° - 180°F) ; blower speed slowly increases to clear residual air unnoticeably; and noise from the blower is reduced due to smooth increase in speed.

Evaluating the five rules gives the response shown in Figure 4. In other words, Figure 4 illustrates the response surface resulting from the rule sets in Figures 3a through 3e. Blower speed as a function of engine coolant temperature (ECT) and in-car minus set point temperature difference. The temperature difference and ECT are in units of degrees Fahrenheit, and blower speed is scaled to blower fan volts. This rather nonlinear response makes sense for each of the conditions described in the rules stated, but smoothly interpolates between the regions.

Fuzzy logic is naturally nonlinear. Linear control is subsumed by fuzzy control, and it is possible to make fuzzy control linear, if wanted. In many control problems, nonlinearity is associated with difficulties. The nonlinearities arising from fuzzy control, however, follow naturally from the logic of the strategy desired. If the strategy is appropriate to the problem, there should be no particular difficulty with the resulting nonlinear response. Any of a number of other methodologies, for example, lookup tables, could produce the same desired response that one sees in Figure 4. On the other hand, the descriptive organization that leads to the response is particularly simple and understandable in the case of fuzzy logic. It is the organization of the control strategy in the form of a set of rules that makes the fuzzy logic strategy easy to understand and maintain.

Another feature of the fuzzy control algorithm is that the response in any particular corner (say, in this example, the amount of blower speed for defrost) may be adjusted separately, without affecting the response elsewhere. If some area of the control space requires unique attention, a rule may be added to provide sufficient control without affecting the control action in other areas of the control space.

Referring again to Figure 2, the fuzzy logic climate controller 40 preferably uses a Motorola 68HC11 microprocessor for its calculations. This microprocessor has 512 bytes of RAM and 12 kilobytes of ROM built in. It uses an 8 megahertz clock providing a 500 nanosecond instruction cycle time. An eight channel analog-to-digital converter is integrated into the microprocessor. Four of the eight channels are used to measure inputs that are used by the control system, namely: ambient (outside) temperature, engine coolant temperature, interior temperature, and sunload. A further input to the system is the set point temperature which may be adjusted by the vehicle occupants using buttons on the front face of the control unit. The system outputs are: intake air mode, discharge air mode (fresh air or recirculate), blend door position, and blower speed. The latter two outputs are continuous-valued, the former discrete. The fuzzy logic control calculation takes scaled input values and produces a single relative output value. Since there are four system outputs, there are four rule sets. For the continuous-valued outputs, the fuzzy logic output value is scaled and used directly; for the discrete outputs, the output values are compared to thresholds to generate particular modes or states of the system.

The controller 40 is preferably programmed primarily in C and cross-assembled into microprocessor instructions. Each fuzzy rule set is incorporated into the fuzzy engine as a set of tables that have been previously converted into a form that allows for efficient calculation during run time. The fuzzy logic control procedure is called as part of the main loop, which is executed every 30 milliseconds. The fuzzy logic engine occupies approximately 600 bytes of ROM and uses 12 bytes of RAM during its execution. Execution time for a fuzzy calculation is typically 20 milliseconds.

Referring again to Figure 2, the main inputs to the fuzzy engine are incar-set temperature difference and absolute engine coolant temperature. Set or target temperature is obtained from a linear combination of incar-set, 75-ambient, and set-75 temperature differences, along with input from the sunload sensor. Target temperature is defined as the incar temperature which the system is trying to reach to produce the zero error.

During hot engine operation, the blower voltage versus target temperature is roughly shaped as a "V" curve with the minimum in blower voltage occurring at target temperature. As incar temperature deviates from target temperature, blower voltage increases on either side of target. Through shaping of the fuzzy logic input membership curves, optimum blower voltage is obtained for any incar-target temperature error.

During warm-up from a cold start, under heating conditions, the fuzzy rules obtaining their input from engine coolant temperature come into action. If ECT is less than CELO temp (43.3°C or 110°F), the blower voltage is held at a minimum and the defrost mode is in effect. AT CELO temperature, a mode shift to mixed mode occurs. Mixed mode stays in effect for 10 seconds and is then followed by floor mode. Above CELO temp, and up to 82.2°C or 180°F, there is a gradual increase in the blower output, finally reaching a maximum value that would be normally obtained under hot engine conditions. This blower ramping is controlled through shaping of the fuzzy logic rules accepting ECT and incar-target temperature error.

The blend door strategy is implemented as a linear combination of incar-set, 75-ambient, set-75 and sunload values. The blend door action is enhanced through a feature that excludes certain discharge air temperatures. Because it is undesirable to discharge warm air out the panel ducts and cold air from the floor ducts, the blend door position is locked at certain positions to prevent improper discharge air temperatures when approaching mode transitions. These locked positions track with mode shift hysteresis and produce a coordinated control between discharge air temperatures and mode shifting.

In addition, in order to better coordinate discharge air temperatures with mode shifting, mixed mode can only be entered in automatic mode during the floor to panel mode shift and not the panel to floor mode shift. During mode shifts, the secondary door positions are slightly delayed in time so that the blend door has the opportunity to reach its new target position before actual mode transitions occur.

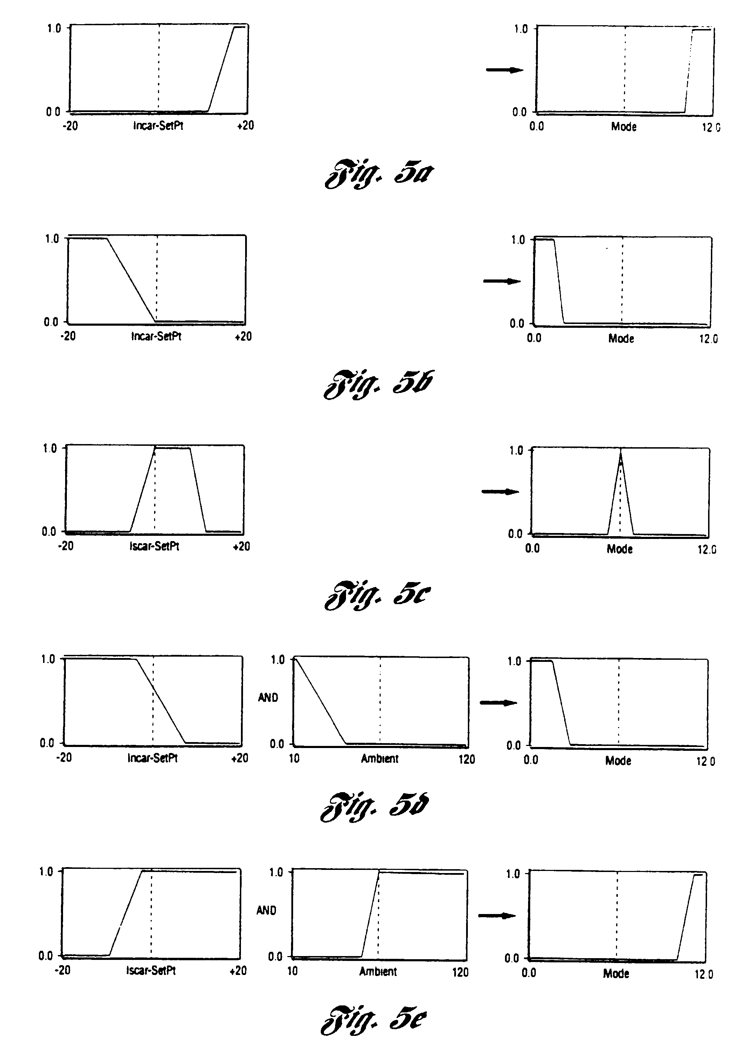

Referring now to Figures 5a through 5e, the desired mode for directing air in the HVAC system 20 can be considered a function of ambient temperature and temperature error (linear temperature - set point temperature). Descriptions are defined by the membership functions in the set of heuristic rules shown in Figures 5a through 5e and as follows:

1. If Incar-Set is high, then mode tends toward Panel;
2. If Incar-Set is low, then mode tends toward Floor;
3. If Incar is close to Set temp, then mode tends toward the middle of Floor and Panel;
4. If Incar-Set is low and Ambient Temperature is low, the mode tends toward Floor; and
5. If Incar-Set is high and Ambient Temperature is high, then mode tends toward Panel.

Evaluating the five rules gives the response shown in Figure 6.

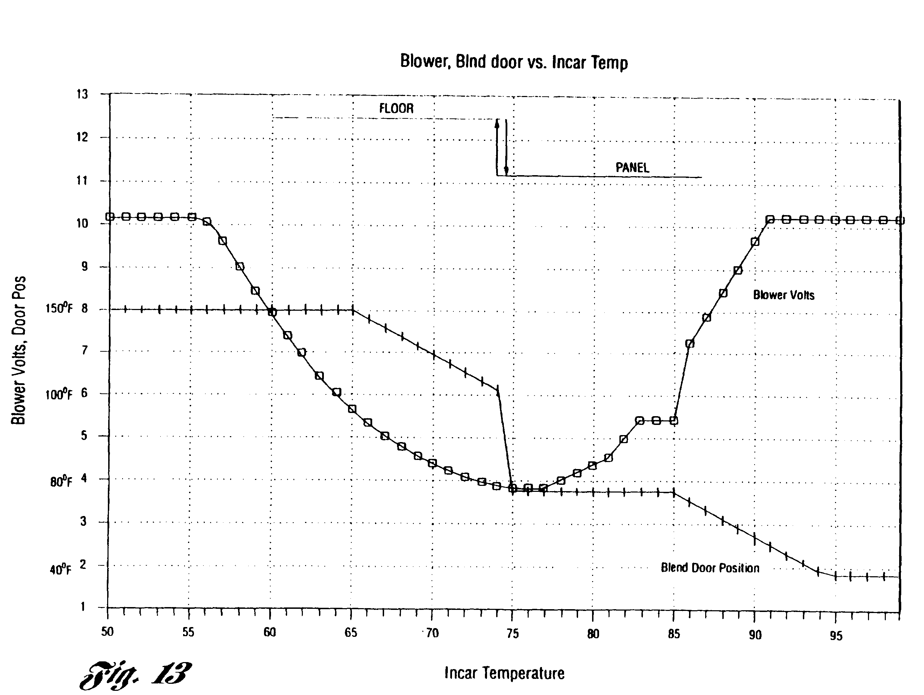

The method and system of the present invention provide numerous advantages. For example, occupant comfort is able to be maintained more reliably over a greater range of conditions. In particular, the comfort rating as ambient temperature varies is judged noticeably superior to the prior art linear strategy. Figure 14 shows the response of the system to a steady increase in ambient temperature and how it varies considerably from the existing linear strategy. It matches at the extreme and mid-range temperatures but has been adjusted through testing to improve comfort and respond differently elsewhere.

The system is also able to address particular customer concerns in certain regions of operation. Blower speed oscillations are removed, thus diminishing a problem with erratic blower noise. Another area of customer concern, that of blower speed onset in cold weather has been discussed above. The method and system responds to the slow rise of the engine coolant temperature by bringing up blower speed slowly, allowing the system to unnoticeably rid the ducts of the residual cold air and gradually bring the blower to its ideal speed as shown in Figures 3a-3e. The shape of the blower speed onset curve can be tailored by adjusting the membership functions of Figures 3a-3e.

The use of the present invention in climate control systems strategy results in improved occupant comfort. The ability to tailor gradual, nonlinear response has allowed the design of the strategy to address certain situations that have not been handed gracefully in the past. In particular, concerns such as blower speed onset during warmup in cold weather and ambient temperature compensation have been ameliorated by appropriate use of the additional flexibility that the present invention provides.

New vehicle programs and the requirements of simultaneous engineering are reducing the time available to develop new automatic climate control strategies. Consequently, the control strategy should be developed at the same time that the HVAC system is being designed. The organization and flexibility of the present invention allow one to develop a set of base rules even before the characteristics of a HVAC system have been finalised.

**Claims**

1. A method for automatically controlling a heating, ventilation and air conditioning (HVAC) system of a vehicle which discharges a flow of air to a passenger cabin of the vehicle, the system including a variable speed blower, means for varying air temperature, ducting, actuators having various control positions for controlling the direction of air flow and the ratio of fresh air to recirculated air and sensors for sensing temperature within the cabin, ambient temperature and a target set point temperature, the method comprising the steps of:

determining the difference between temperature within the cabin and the target set point temperature to obtain a difference signal;
defining membership functions and fuzzy rules between the difference signal and the speed of the blower and between the difference signal and the control positions of the actuators; and
generating control signals to control the positions of the actuators and the speed of the blower to cause the system to discharge air into the cabin having a temperature and flow based on the difference signal, the membership functions and the fuzzy rules,

characterised in that the method uses a control algorithm to calculate a fuzzy variable conditioned on ambient temperature and the said difference signal to vary the position of a temperature blend door included in the system to control the discharge temperature of the said air flow, the control algorithm being effective to hold the said discharge temperature below the lower limit of an excluded range of temperature when the said range is approached from below and to hold the said discharge temperature above the excluded range when approached from above such that the relation between the said discharge temperature and the blend door position follows a hysteresis loop.

2. A method as claimed in claim 1, further comprising the step of defining membership functions and fuzzy rules between the ambient temperature and the control positions of the actuators and wherein the step of generating is also based on the ambient temperature.

3. a method as claimed in claim 1, further comprising the step of defining membership functions and fuzzy rules between the ambient temperature and the speed of the blower, and wherein the step of generating is also based on the ambient temperature.

4. A method as claimed in claim 1, wherein one of the sensors senses sunload temperature and wherein the method further comprises the step of defining membership functions and fuzzy rules between the sunload temperature and the control positions of the actuators and wherein the step of generating is also based on the sunload temperature.

5. A method as claimed in claim 1, wherein one of the sensors senses engine temperature and wherein the method further comprises the step of defining membership functions and fuzzy rules between the engine temperature and the speed of the blower and wherein the step of generating is also based on the engine temperature.

6. A control system for automatically controlling a heating, ventilation and air conditioning (HVAC) system of a vehicle which discharges a flow of air to a passenger cabin of the vehicle, the HVAC system including a variable speed blower (30,32), means for varying air temperature, ducting (38), actuators (22,24,26,28) having various control positions for controlling the direction of air flow and the ratio of fresh air to recirculated air and sensors for sensing temperature within the cabin, ambient temperature and a target set point temperature, the system comprising:

means (42) for determining the difference between temperature within the cabin and the target set point temperature to obtain a difference signal;
means (40,46) for defining membership functions and fuzzy rules between the difference signal and the speed of the blower and between the difference signal and the control positions of the actuators; and
means (44) for generating control signals to control the positions of the actuators (22,24,28) and the speed of the blower (32) to cause the HVAC system to discharge air into the cabin having a temperature and flow based on the difference signal, the membership functions and the fuzzy rules,

characterised in that a control algorithm is used to calculate a fuzzy variable conditioned on ambient temperature and the said difference signal to vary the position of a temperature blend door (26) included in the system for controlling the discharge temperature of the said air flow, the control algorithm being effective to hold the discharge temperature of the said air flow below the lower limit of an excluded range of temperature when the said range is approached from below and to hold the discharge temperature above the excluded range when approached from above such that the relation between the said discharge temperature and the blend door position follows a hysteresis loop.

7. A system as claimed in claim 6, wherein one of the sensors senses engine temperature and wherein the system further comprises means for defining membership functions and fuzzy rules between the engine temperature and the speed of the blower and wherein the means for generating generates the control signals also based on the engine temperature.

8. A system as claimed in claim 6, further comprising means for defining membership functions and fuzzy rules between the ambient temperature and the control positions of the actuators and wherein the means for generating generates the control signals also based on the ambient temperature.

9. A system as claimed in claim 6, wherein one of the sensors senses sunload temperature and wherein the system further comprises means for defining membership functions and fuzzy rules between the sunload temperature and the control positions of the actuators and wherein the means for generating generates the control signals also based on the sunload temperature.

10. A system as claimed in claim 6, further comprising means for defining membership functions and fuzzy rules between the ambient temperature and the speed of the blower and wherein the means for generating generates the control signals also based on the ambient temperature.

**Patentansprüche**

1. Verfahren zur automatischen Steuerung einer Heiz-, Ventilations- und Klimaanlage (HVAC) für ein Fahrzeug, welche einen Luftstrom in einen Fahrgastraum des Fahrzeuges einleitet, wobei das System ein Gebläse mit regelbarer Drehzahl aufweist, Mittel zur Veränderung der Lufttemperatur, Kanäle, Stellglieder mit verschiedenen Steuerstellungen zur Steuerung der Richtung des Luftstromes und des Verhältnisses zwischen frischer und umgewälzter Luft, und Sensoren zum Erfassen der Temperatur im Fahrgastraum, der Umgebungstemperatur und einer Ziel-Soll-Temperatur, wobei das Verfahren folgende Schritte aufweist:

   Bestimmen der Differenz zwischen der Temperatur innerhalb des Fahrgastraumes und der Ziel-Soll-Temperatur zur Erzielung eines Differenzsignales;
   Bestimmen von Zugehörigkeitsfunktionen und Fuzzy-Regeln zwischen dem Differenzsignal und der Gebläsedrehzahl und zwischen dem Differenzsignal und den Steuerstellungen der Stellglieder; und
   Erzeugen von Steuersignalen zur Einstellung der Positionen der Stellglieder und der Gebläsedrehzahl, so daß das System Luft in den Fahrgastraum einleitet, deren Temperatur und Durchflußmenge auf dem Differenzsignal, den Zugehörigkeitsfunktionen und den Fuzzy -Regeln basieren,

   dadurch gekennzeichnet, daß das Verfahren einen Steueralgorithmus zur Berechnung einer Fuzzy-Variablen beinhaltet, die anhand der Umgebungstemperatur und des besagten Differenzsignals aufbereitet ist, so daß die Position einer im System enthaltenen Temperaturmischerklappe verändert werden kann, so daß die Austrittstemperatur des besagten Luftstromes geregelt wird, wobei der Steueralgorithmus derart wirkt, daß er besagte Austrittstemperatur unter der unteren Grenze eines auszuschließenden Temperaturbereiches hält, wenn er sich diesem Bereich von unten her nähert, und daß er die besagte Austrittstemperatur über dem auszuschließenden Bereich hält, wenn er sich diesem von oben her nähert, so daß die Relation zwischen besagter Austrittstemperatur und der Mischerklappenstellung einer Hystereseschleife folgt.

2. Verfahren nach Anspruch 1, außerdem den Schritt der Erstellung von Zugehörigkeitsfunktionen und Fuzzy-Regeln zwischen der Umgebungstemperatur und den Steuerstellungen der Stellglieder aufweisend, und worin der Schritt der Erzeugung auch auf der Umgebungstemperatur basiert.

3. Verfahren nach Anspruch 1, außerdem den Schritt der Bestimmung von Zugehörigkeitsfunktionen und Fuzzy-Regeln zwischen der Umgebungstemperatur und der Gebläsedrehzahl aufweisend, und worin der Schritt der Erzeugung auch auf der Umgebungstemperatur basiert.

4. Verfahren nach Anspruch 1, worin einer der Sensoren die Temperatur der Sonneneinstrahlung erfaßt, und worin das Verfahren außerdem den Schritt der Erstellung von Zugehörigkeitsfunktionen und Fuzzy-Regeln zwischen der Temperatur der Sonneneinstrahlung und den Steuerpositionen der Stellglieder beinhaltet, und worin der Schritt der Erzeugung auch auf der Temperatur der Sonneneinstrahlung basiert.

5. Verfahren nach Anspruch 1, worin einer der Sensoren die Motortemperatur erfaßt, und worin das Verfahren au-

EP 0 739 506 B1

ßerdem den Schritt der Erstellung von Zugehörigkeitsfunktionen und Fuzzy-Regeln zwischen Motortemperatur und Gebläsedrehzahl enthält, und worin der Schritt der Erzeugung auch auf der Motortemperatur basiert.

6. Regelsystem zur automatischen Regelung eines Heiz-, Ventilations- und Klimasystems (HVAC) für ein Fahrzeug, welches einen Luftstrom in einen Fahrgastraum des Fahrzeuges einleitet, wobei das HVAC-System ein Gebläse (30, 32) mit regelbarer Drehzahl aufweist, Mittel zur Veränderung der Lufttemperatur, Kanäle (38), Stellglieder (22, 24, 26, 28) mit verschiedenen Steuerstellungen zur Steuerung der Richtung des Luftstromes und des Verhältnisses zwischen frischer und umgewälzter Luft, und Sensoren zum Erfassen der Temperatur im Fahrgastraum, der Umgebungstemperatur und einer Ziel-Soll-Temperatur, wobei das System noch folgendes aufweist:

Mittel (42) zur Bestimmung einer Differenz zwischen der Temperatur im Innenraum und der Ziel-Soll-Temperatur zur Ermittlung eines Differenzsignales;
Mittel (40, 46) zur Bestimmung von Zugehörigkeitsfunktionen und Fuzzy-Regeln zwischen dem Differenzsignal und der Gebläsedrehzahl und zwischen dem Differenzsignal und den Steuerstellungen der Stellglieder; und
Mittel (44) zur Erzeugung von Steuersignalen zur Steuerung der Positionen der Stellglieder (22, 24, 28) und der Gebläsedrehzahl (32), so daß das HVAC-System Luft in den Fahrgastraum einleitet, deren Temperatur und Durchflußmenge auf dem Differenzsignal, den Zugehörigkeitsfunktionen und den Fuzzy-Regeln basieren, dadurch gekennzeichnet, daß ein Steueralgorithmus zur Berechnung einer Fuzzy-Variablen eingesetzt wird, die anhand der Umgebungstemperatur und des besagten Differenzsignals erstellt wird, so daß die Stellung einer Temperaturmischerklappe (26) in dem System derart verändert wird, daß die Austrittstemperatur des besagten Luftstromes geregelt wird, wobei der Steueralgorithmus derart wirksam ist, daß er besagte Austrittstemperatur unter der unteren Grenze eines auszuschließenden Temperaturbereiches hält, wenn er sich diesem Bereich von unten her nähert, und daß er die besagte Austrittstemperatur über dem auszuschließenden Bereich hält, wenn er sich diesem von oben her nähert, so daß die Relation zwischen besagter Austrittstemperatur und der Mischerklappenstellung einer Hystereseschleife folgt.

7. System nach Anspruch 6, worin einer der Sensoren die Motortemperatur erfaßt, und worin das System außerdem Mittel zur Bestimmung von Zugehörigkeitsfunktionen und Fuzzy-Regeln zwischen der Motortemperatur und der Gebläsedrehzahl enthält, und worin die Mittel zur Erzeugung die Steuersignale auch anhand der Motortemperatur erzeugen.

8. System nach Anspruch 6, außerdem Mittel zur Bestimmung von Zugehörigkeitsfunktionen und Fuzzy-Regeln zwischen der Umgebungstemperatur und den Steuerpositionen der Stellglieder aufweisend, und worin die Mittel zur Erzeugung die Steuersignale auch anhand der Umgebungstemperatur erzeugen.

9. System nach Anspruch 6, worin einer der Sensoren die Temperatur der Sonneneinstrahlung erfaßt, und worin das System des weiteren Mittel zur Bestimmung von Zugehörigkeitsfunktionen und Fuzzy-Regeln zwischen der Temperatur der Sonneneinstrahlung und den Steuerpositionen der Stellglieder umfaßt, und worin die Mittel zur Erzeugung die Steuersignale auch anhand der Temperatur der Sonneneinstrahlung erzeugen.

10. System nach Anspruch 6, außerdem Mittel zur Bestimmung von Zugehörigkeitsfunktionen und Fuzzy-Regeln zwischen der Umgebungstemperatur und der Gebläsedrehzahl beinhaltend, und worin die Mittel zur Erzeugung die Steuersignale auch anhand der Umgebungstemperatur erzeugen.

**Revendications**

1. Procédé de commande automatique d'un système de chauffage, ventilation et conditionnement d'air (HVAC) d'un véhicule qui refoule une circulation d'air vers un habitacle des passagers du véhicule, le système comprenant un ventilateur à vitesse variable, un moyen destiné à faire varier la température de l'air, des conduits, des actionneurs comportant diverses positions de commande afin de commander la direction de la circulation d'air et le rapport de l'air frais sur l'air remis en circulation, et des capteurs destinés à détecter la température à l'intérieur de l'habitacle, la température ambiante et une température de point de consigne cible, le procédé comprenant les étapes consistant à :

déterminer la différence entre la température à l'intérieur de l'habitacle et la température de point de consigne cible afin d'obtenir un signal de différence,
définir des fonctions d'appartenance et des règles de logique floue entre le signal de différence et la vitesse du ventilateur, ainsi qu'entre le signal de différence et les positions de commande des actionneurs, et générer des signaux de commande afin de commander les positions des actionneurs et la vitesse du ventilateur afin d'amener le système à refouler dans l'habitacle de l'air présentant une température et un débit basés sur le signal de différence, les fonctions d'appartenance et les règles de logique floue,

caractérisé en ce que le procédé utilise un algorithme de commande pour calculer une variable de logique floue basée sur la température ambiante et le signal de différence afin de faire varier la position d'un volet de dosage de température inclus dans le système de façon à commander la température de refoulement de ladite circulation d'air, l'algorithme de commande étant efficace pour maintenir ladite température de refoulement au-dessous de la limite inférieure d'une plage de température exclue lorsqu'elle se rapproche de ladite plage par le bas, et pour maintenir ladite température de refoulement au-dessus de la plage exclue lorsqu'elle s'en rapproche par le haut, de façon que la relation entre ladite température de refoulement et la position du volet de dosage suivent un cycle d'hystérésis.

2. Procédé selon la revendication 1, comprenant en outre l'étape consistant à définir des fonctions d'appartenance et des règles de logique floue entre la température ambiante et les positions de commande des actionneurs, et dans lequel l'étape de génération est également basée sur la température ambiante.

3. Procédé selon la revendication 1, comprenant en outre l'étape consistant à définir des fonctions d'appartenance et des règles de logique floue entre la température ambiante et la vitesse du ventilateur, et dans lequel l'étape de génération est également basée sur la température ambiante.

4. Procédé selon la revendication 1, dans lequel l'un des capteurs détecte la température due au soleil, et dans lequel le procédé comprend en outre l'étape consistant à définir des fonctions d'appartenance et des règles de logique floue entre la température due au soleil et la position des actionneurs, et dans lequel l'étape de génération est également basée sur la température due au soleil.

5. Procédé selon la revendication 1, dans lequel l'un des capteurs détecte la température du moteur, et dans lequel le procédé comprend en outre l'étape consistant à définir des fonctions d'appartenance et des règles de logique floue entre la température du moteur et la vitesse du ventilateur et dans lequel l'étape de génération est également basée sur la température du moteur.

6. Système de commande destiné à la commande automatique d'un système de chauffage, ventilation et conditionnement d'air (HVAC) d'un véhicule qui refoule une circulation d'air vers un habitacle des passagers du véhicule, le système HVAC comprenant un ventilateur à vitesse variable (30, 32), un moyen destiné à faire varier la température de l'air, des conduits (38), des actionneurs (22, 24, 26, 28) comportant diverses positions de commande afin de commander la direction de la circulation d'air et le rapport de l'air frais sur l'air remis en circulation, et des capteurs destinés à détecter la température à l'intérieur de l'habitacle, la température ambiante et une température de point de consigne cible, le système comprenant :

un moyen (42) destiné à déterminer la différence entre la température à l'intérieur de l'habitacle et la température de point de consigne cible afin d'obtenir un signal de différence,
un moyen (40, 46) destiné à définir des fonctions d'appartenance et des règles de logique floue entre le signal de différence et la vitesse du ventilateur, ainsi qu'entre le signal de différence et les positions de commande des actionneurs, et
un moyen (44) destiné à générer des signaux de commande afin de commander les positions des actionneurs (22, 24, 28) ainsi que la vitesse du ventilateur (32) afin d'amener le système HVAC à refouler dans l'habitacle de l'air présentant une température et un débit basés sur le signal de différence, les fonctions d'appartenance et les règles de logique floue,

caractérisé en ce qu'un algorithme de commande est utilisé pour calculer une variable de logique floue dépendant de la température ambiante et dudit signal de différence afin de faire varier la position d'un volet de dosage de température (26) inclus dans le système de façon à commander la température de refoulement de ladite circulation d'air, l'algorithme de commande étant efficace pour maintenir la température de refoulement de ladite circulation d'air au-dessous de la limite inférieure d'une plage de température exclue lorsqu'elle se rapproche de ladite plage par le bas, et pour maintenir la température de refoulement au-dessus de la plage exclue lorsqu'elle s'en rapproche par le haut, de façon que la relation entre ladite température de refoulement et la position du volet de dosage suivent un cycle d'hystérésis.

**7.** Système selon la revendication 6, dans lequel l'un des capteurs détecte la température du moteur, et dans lequel le système comprend en outre un moyen destiné à définir des fonctions d'appartenance et des règles de logique floue entre la température du moteur et la vitesse du ventilateur, et dans lequel le moyen destiné à générer génère les signaux de commande en se basant également sur la température du moteur.

**8.** Système selon la revendication 6, comprenant en outre un moyen destiné à définir des fonctions d'appartenance et des règles de logique floue entre la température ambiante et les positions de commande des actionneurs, et dans lequel le moyen destiné à générer génère les signaux de commande en se basant également sur la température ambiante.

**9.** Système selon la revendication 6, dans lequel l'un des capteurs détecte la température due au soleil, et dans lequel le système comprend en outre un moyen destiné à définir des fonctions d'appartenance et des règles de logique floue entre la température due au soleil et les positions de commande des actionneurs, et dans lequel le moyen destiné à générer génère les signaux de commande en se basant également sur le température due au soleil.

**10.** Système selon la revendication 6, comprenant en outre un moyen destiné à définir des fonctions d'appartenance et des règles de logique floue entre la température ambiante et la vitesse du ventilateur, et dans lequel le moyen destiné à générer génère les signaux de commande en se basant également sur la température ambiante.

TO DEFROSTER

OUTSIDE AIR

TO FLOOR

RECIRC AIR

NV - NO VACUUM
PV - PARTIAL VACUUM
V - VACUUM

LEFT SIDE DEMISTER AIR

TO R AND L INSTRUMENT PANEL REGISTERS

RIGHT SIDE DEMISTER AIR

TO CENTER INSTRUMENT PANEL REGISTERS

34

26

36

30

32

20

22

24

38

28

V

PV

NV

V

NV

V

NV

*Fig. 1*

EP 0 739 506 B1

Fuzzy Logic EATC System Diagram

| Incar - Set Temp | | Sunload |
| Ambient Temp | | Set - 75 |
| Engine Coolant Temp | | Discharge Temp |

*46*

Conditioning — *42*

Rule Sets:

- blower speed
- offset
- target adjust
- mode shift
- term calibrations

Scaled In — *40*

Fuzzy Engine

Scaled Out

*44*        *32*

Hardware
Controller

Blower

*26* — Blend Door

Vacuum Doors

*22, 24, 28*

*Fig. 2*

EP 0 739 506 B1

*Fig. 3a*

*Fig. 3b*

*Fig. 3c*

*Fig. 3d*

*Fig. 3e*

16

*Fig. 4*

*Fig. 5a*

*Fig. 5b*

*Fig. 5c*

*Fig. 5b*

*Fig. 5e*

*Fig. 6*

*Fig. 7a*

*Fig. 7b*

*Fig. 7c*

*Fig. 7d*

Fig. 7e

Fig. 7f

Fig. 7g

Fig. 7h

*Fig. 8a*

*Fig. 8b*

*Fig. 8c*

*Fig. 9*

Fig. 10a

Fig. 10b

Fig. 10c

Fig. 11a

Fig. 11b

Fig. 11c

Fig. 12

Blower, Blnd door vs. Incar Temp

*Fig. 13*

Incar Temperature

EP 0 739 506 B1

DEGREES OF AMBIENT COMPENSATION AT 75 SET POINT

*Fig. 14*

BLOWER SPEED DURING HEATER WARMUP

*Fig. 15*

EP 0 739 506 B1

$T_{INCAR}$   $T_{Evaporator}$   Twall

26

$T_{AMB}$   28   $t_1$ blower   $T_B$   (1-frac)   $T_M$   $t_3$ blower   $T_{Discharge}$

frac

$t_2$ blower   $T_{Heater}$

## Fig. 16

$T_{ELEMENT}$

$T_{IN}$   $t_1$   $T_{OUT}$

Interaction time

## Fig. 17